(19) Europäisches Patentamt
European Patent Office
Office européen des brevets

(11) **EP 4 004 508 B1**

(12) **EUROPÄISCHE PATENTSCHRIFT**

(45) Veröffentlichungstag und Bekanntmachung des Hinweises auf die Patenterteilung:
**29.11.2023   Patentblatt 2023/48**

(21) Anmeldenummer: **20743624.7**

(22) Anmeldetag: **15.07.2020**

(51) Internationale Patentklassifikation (IPC):
**G01K 1/143** (2021.01)   **A47J 36/32** (2006.01)
**G01K 7/42** (2006.01)   **A47J 43/046** (2006.01)
**G01J 5/00** (2022.01)

(52) Gemeinsame Patentklassifikation (CPC):
**G01K 1/143; A47J 36/32; A47J 43/046;
G01J 5/0003; G01K 7/42;** G01K 2207/08

(86) Internationale Anmeldenummer:
**PCT/EP2020/069979**

(87) Internationale Veröffentlichungsnummer:
**WO 2021/018589 (04.02.2021 Gazette 2021/05)**

(54) **VORRICHTUNG UND VERFAHREN ZUR ERMITTLUNG EINES SCHÄTZWERTES DER TEMPERATUR DES INHALTS EINES BEHÄLTERS**

DEVICE AND METHOD FOR ESTIMATING THE TEMPERATURE OF THE CONTENTS OF A CONTAINER

DISPOSITIF ET PROCÉDÉ D'ESTIMATION DE LA TEMPÉRATURE DU CONTENU D'UN RÉCIPIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2019   DE 102019211289**

(43) Veröffentlichungstag der Anmeldung:
**01.06.2022   Patentblatt 2022/22**

(73) Patentinhaber: **BSH Hausgeräte GmbH
81739 München (DE)**

(72) Erfinder:
• **BRINOVSEK, Luka**
  **3341 Smartno ob Dreti (SI)**
• **BLATNIK, Gregor**
  **2381 Podgorje (SI)**
• **BLISCHKE, Daniela**
  **84529 Tittmoning (DE)**

(56) Entgegenhaltungen:
**EP-A1- 2 572 173      EP-B1- 2 572 173
DE-A1-102016 113 494   US-B1- 6 462 316**

**Beschreibung**

Die Erfindung betrifft eine Vorrichtung und ein entsprechendes Verfahren zur Ermittlung eines Schätzwertes der Temperatur des Inhalts eines Behälters, insbesondere des Inhalts des Behälters eines Hausgeräts.

Ein Hausgerät, insbesondere eine Küchenmaschine, umfasst einen Behälter, in dem ein Inhalt, z.B. ein Nahrungsmittel, aufgenommen werden kann, um den Inhalt innerhalb des Behälters zu ver- bzw. bearbeiten. Im Rahmen der Bearbeitung des Inhalts kann eine Temperierung (insbesondere ein Kühlen oder ein Erhitzen bzw. Aufwärmen) des Inhalts erfolgen. In diesem Zusammenhang kann es erforderlich sein, einen Schätzwert der Temperatur des Inhalts zu ermitteln (z.B. um die Temperatur des Inhalts auf einen bestimmten Sollwert einzustellen).

EP 2 572 173 B1 beschreibt ein Verfahren zur Ermittlung der Temperatur des Inhalts eines Behälters während eines Aufwärmvorgangs. US 6,462,316 B1 beschreibt ein Verfahren zur Ermittlung der Temperatur einer Kochutensilie, wie z.B. einer Pfanne. DE10 2016 113 494 A1 offenbart ebenfalls ein Verfahren zur Schätzung einer Temperatur im Inneren eines Behälters.

Das vorliegende Dokument befasst sich mit der technischen Aufgabe, in effizienter und präziser Weise einen Schätzwert der Temperatur des Inhalts eines Behälters, insbesondere eines Nahrungsmittels in einem Behälter, zu ermitteln. Des Weiteren befasst sich das vorliegende Dokument damit, die Temperatur des Inhalts eines Behälters in präziser Weise einzustellen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Vorrichtung zur Ermittlung eines Schätzwertes der (Inhalts-) Temperatur des Inhalts (insbesondere eines (ggf. flüssigen) Nahrungsmittels) eines Behälters beschrieben. Der Behälter und/oder die Vorrichtung können Teil eines Hausgeräts sein. Der ermittelte Schätzwert der Inhalts-Temperatur kann dann dazu verwendet werden, einen zuverlässigen und präzisen Betrieb des Hausgeräts zu ermöglichen.

Die Vorrichtung umfasst einen Behälter mit einer den Inhalt zumindest teilweise umschließenden Behälter-Wand. Der Behälter kann z.B. aus einem Kunststoff und/oder aus Glas und/oder aus einem Metall (z.B. Edelstahl) bestehen. Die Behälter-Wand kann eine bestimmte Dicke bzw. Stärke aufweisen.

Des Weiteren umfasst die Vorrichtung eine Temperierungseinheit, die eingerichtet ist, thermische Energie zu erzeugen oder zu entziehen, um den Behälter von zumindest einer Seite des Behälters her zu temperieren. Beispielsweise kann die Temperierungseinheit ein Heizelement umfassen, um thermische Energie zu erzeugen, und um dadurch den Behälter zu erwärmen. Alternativ oder ergänzend kann die Temperierungseinheit ein Kühlelement umfassen, das eingerichtet ist, thermische Energie zu entziehen, um den Behälter zu kühlen. Die Temperierungseinheit kann an der Unterseite des Behälters angeordnet sein.

Die Vorrichtung umfasst ferner einen Basis-Temperatursensor, der eingerichtet ist, Temperaturdaten in Bezug auf den Behälter zu erfassen. Der Basis-Temperatursensor kann z.B. einen temperaturabhängigen elektrischen Widerstand umfassen. Der Basis-Temperatursensor kann derart angeordnet sein, dass die von der Temperierungseinheit erzeugte oder entzogene thermische Energie den Basis-Temperatursensor beeinflusst. Insbesondere können die Temperaturdaten (d.h. die Sensordaten) des Basis-Temperatursensors durch den Betrieb der Temperierungseinheit beeinflusst sein. Beispielsweise kann der Basis-Temperatursensor in unmittelbarer Nähe zu der Temperierungseinheit angeordnet sein (insbesondere an der Unterseite des Behälters).

Außerdem umfasst die Vorrichtung eine Recheneinheit, die eingerichtet ist, anhand der Temperaturdaten und anhand von Energiedaten in Bezug auf die Energiemenge der erzeugten oder der entzogenen thermischen Energie den Schätzwert der Inhalts-Temperatur des Inhalts des Behälters zu ermitteln. Dabei kann die Recheneinheit eingerichtet sein, die Energiedaten auf Basis von Steuerdaten zur Steuerung der Temperierungseinheit und ggf. auf Basis von Kenndaten in Bezug auf die Temperierungseinheit zu ermitteln. Die Kenndaten können z.B. für unterschiedliche Betriebszustände der Temperierungseinheit die jeweils erzeugte oder entzogene Energiemenge anzeigen. Die Energiedaten können z.B. die Energiemenge innerhalb einer bestimmten Zeitdauer (z.B. einer Zeitdauer zwischen 1 Sekunde und 10 Sekunden) anzeigen.

Durch die Berücksichtigung der Energiedaten kann in präziser Weise ein Schätzwert für die Inhalts-Temperatur des Inhalts des Behälters ermittelt werden. So wird ein präziser Betrieb eines Hausgeräts ermöglicht. Insbesondere kann so ein Betrieb eines Hausgeräts unabhängig von der Füllmenge des Behälters des Hausgeräts ermöglicht werden. Des Weiteren kann so das automatische Führen durch ein Rezept an einer Küchenmaschine verbessert werden.

Die Recheneinheit ist dazu eingerichtet, auf Basis der Temperaturdaten einen Wert einer durch die Temperaturdaten angezeigten Basis-Temperatur zu ermitteln. Der Wert der Basis-Temperatur kann dabei ggf. allein aus Basis der Temperaturdaten ermittelt werden. Mit anderen Worten, die Basis-Temperatur kann der Temperatur entsprechen, die tatsächlich von dem Temperatursensor erfasst wird. Der ermittelte Wert der Basis-Temperatur kann dann in Abhängigkeit von den Energiedaten angepasst werden, um den Schätzwert der Inhalts-Temperatur des Inhalts des Behälters zu ermitteln.

Weiterhin ist die Recheneinheit eingerichtet, die durch die Energiedaten angezeigte Energiemenge mit einem Korrekturfaktor zu multiplizieren, um einen Korrekturwert für die Basis-Temperatur zu ermitteln. Der ermittelte Wert der Basis-Temperatur wird dann mit dem Korrekturwert korrigiert, um den Schätzwert der Inhalts-Temperatur zu ermitteln. Insbesondere kann der Korrekturwert von dem ermittelten Wert der Basis-Temperatur abgezogen werden, um den Schätzwert der Inhalts-Temperatur zu ermitteln (insbesondere dann, wenn die Temperierungseinheit thermische Energie erzeugt). Alternativ kann der Korrekturwert zu dem ermittelten Wert der Basis-Temperatur addiert werden, um den Schätzwert der Inhalts-Temperatur zu ermitteln (insbesondere dann, wenn die Temperierungseinheit thermische Energie entzieht). So kann der Schätzwert der Inhalts-Temperatur (der z.B. in Grad Celsius angegeben wird) in besonders präziser Weise ermittelt werden.

Der Korrekturfaktor ist von dem ermittelten Wert der Basis-Temperatur abhängig. Die Recheneinheit ermittelt den für den aktuellen Wert der Basis-Temperatur gültigen Korrekturfaktor (z.B. aus einer in der Vorrichtung gespeicherten Tabelle auslesen). Durch die Verwendung eines temperaturabhängigen Korrekturfaktors kann die Genauigkeit des Schätzwertes weiter erhöht werden.

Die Recheneinheit kann eingerichtet sein, Inhaltsinformation in Bezug auf eine Eigenschaft des Inhalts in dem Behälter zu ermitteln. Die Inhaltsinformation kann z.B. den Typ, die Viskosität und/oder das Gewicht des Inhalts anzeigen. Der Korrekturfaktor kann dann in Abhängigkeit von der Inhaltsinformation ermittelt werden (z.B. aus einer (ggf. mehrdimensionalen) Tabelle ausgelesen werden). So kann die Genauigkeit des Schätzwertes der Inhalts-Temperatur weiter erhöht werden.

Die Recheneinheit kann somit eingerichtet sein, Gewichtsdaten in Bezug auf das Gewicht des Inhalts des Behälters zu ermitteln. Der Schätzwert der Inhalts-Temperatur kann dann in besonders präziser Weise in Abhängigkeit von den Gewichtsdaten ermittelt werden.

Die Vorrichtung kann einen Zusatz-Temperatursensor, insbesondere einen Infrarot (IR)-Sensor, umfassen. Der Zusatz-Temperatursensor kann z.B. auf die Behälter-Wand gerichtet sein. Alternativ oder ergänzend kann der Zusatz-Temperatursensor eingerichtet sein, Sensordaten in Bezug auf die (Wand-) Temperatur Tw der Behälter-Wand zu erfassen. Der Zusatz-Temperatursensor, insbesondere der IR-Sensor, ist dabei bevorzugt außerhalb des Behälters angeordnet (um zu gewährleisten, dass der IR-Sensor nicht durch den Inhalt des Behälters verschmutzt wird). Insbesondere kann der Zusatz-Temperatursensor, insbesondere der IR-Sensor, eingerichtet sein, Sensordaten in Bezug auf die Intensität von Strahlung im Infrarot-Spektralbereich zu erfassen, die von der Behälter-Wand ausgeht. Mit anderen Worten, der Zusatz-Temperatursensor, insbesondere der IR-Sensor, kann eingerichtet sein, Sensordaten in Bezug auf die Emission von Infrarot-Strahlung der Behälter-Wand zu erfassen. Alternativ oder ergänzend kann der Zusatz-Temperatursensor einen temperaturabhängigen Messwiderstand umfassen.

Die Recheneinheit kann eingerichtet sein, den Schätzwert der Inhalts-Temperatur auch auf Basis der Sensordaten des Zusatz-Temperatursensors zu ermitteln. So kann die Genauigkeit des Schätzwertes der Inhalts-Temperatur weiter erhöht werden.

Die Recheneinheit kann eingerichtet sein, die Temperierungseinheit in Abhängigkeit von dem ermittelten Schätzwert der Inhalts-Temperatur zu betreiben, insbesondere um einen Istwert der Inhalts-Temperatur auf einen Sollwert einzustellen. So kann ein präziser Betrieb der Vorrichtung (insbesondere in Bezug auf die Temperierung des Inhalts der Vorrichtung) ermöglicht werden.

Die Recheneinheit kann eingerichtet sein, an einer Sequenz von Zeitpunkten eine entsprechende Sequenz von Temperaturdaten und Energiedaten, und basierend darauf eine entsprechende Sequenz von Schätzwerten der Inhalts-Temperatur zu ermitteln (z.B. periodisch, etwa mit einer Frequenz von 1Hz oder mehr). Es kann somit quasikontinuierlich die Inhalts-Temperatur des Inhalts des Behälters überwacht werden (z.B. um den Istwert der Inhalts-Temperatur auf einen bestimmten Sollwert einzustellen, insbesondere zu regeln).

Gemäß einem Ausführungsbeispiel wird ein Hausgerät (insbesondere eine Küchenmaschine) beschrieben. Das Hausgerät umfasst die in diesem Dokument beschriebene Vorrichtung, die eingerichtet ist, einen Schätzwert der Inhalts-Temperatur des Inhalts (z.B. eines Nahrungsmittels) des Behälters zu ermitteln. Des Weiteren umfasst das Hausgerät eine Steuereinheit (z.B. kombiniert mit der Recheneinheit der Vorrichtung), die eingerichtet ist, das Hausgerät in Abhängigkeit von dem ermittelten Schätzwert der Inhalts-Temperatur zu betreiben. So kann ein präziser Betrieb eines Hausgeräts (insbesondere eines Haushaltsgeräts, etwa eines Ofens, einer Küchenmaschine, eines Kühlschranks, einer Waschmaschine, einer Spülmaschine, und/oder eines Trockners) ermöglicht werden.

Gemäß einem weiteren Aspekt der Erfindung wird ein Verfahren zur Ermittlung eines Schätzwertes der Inhalts-Temperatur des Inhalts eines Behälters beschrieben. Das Verfahren umfasst das Erfassen von Temperaturdaten in Bezug auf den Behälter mittels eines Basis-Temperatursensors. Dabei ist der Basis-Temperatursensor derart angeordnet, dass von einer Temperierungseinheit zur Temperierung des Behälters erzeugte oder entzogene thermische Energie den Basis-Temperatursensor beeinflusst. Das Verfahren umfasst ferner das Ermitteln von Energiedaten in Bezug auf eine Energiemenge der erzeugten oder der entzogenen thermischen Energie. Des Weiteren umfasst das Verfahren das Ermitteln, auf Basis der Temperaturdaten, eines Wertes einer durch die Temperaturdaten angezeigten Basis-Temperatur, das darauf folgende Ermitteln eines von dem ermittelten Wert der Basis-Temperatur abhängigen Korrekturfaktors, das Multiplizieren der durch die Energiedaten angezeigten Energiemenge der erzeugten oder der entzogenen thermischen Energie mit dem Korrekturfaktor, um einen Korrekturwert für die Basis-Temperatur zu ermitteln; und schließlich das Korrigieren des ermittelten Wertes der Basis-Temperatur mit dem Korrekturwert, um den Schätzwert der Inhalts-Temperatur des Inhalts des Behälters zu ermitteln.

Im Weiteren wird die Erfindung anhand von in der beigefügten Zeichnung dargestellten Ausführungsbeispielen näher beschrieben. Dabei zeigen

Figur 1a ein Blockdiagramm einer Küchenmaschine als Beispiel für ein Hausgerät;

Figur 1b eine Küchenmaschine in einer perspektivischen Ansicht;

Figur 1c die Basis einer Küchenmaschine ohne Behälter;

Figur 2 eine beispielhafte Vorrichtung zur Ermittlung eines Schätzwertes der Temperatur des Inhalts eines Behälters;

Figur 3a beispielhafte zeitliche Verläufe der durch einen Basis-Temperatursensor ermittelten Temperatur, der durch einen IR-Sensor ermittelten Temperatur, und der geschätzten Temperatur des Inhalts eines Behälters;

Figur 3b einen beispielhaften Korrekturfaktor zur Korrektur der gemessenen Temperatur eines Basis-Temperatursensors; und

Figur 4 ein Ablaufdiagramm eines beispielhaften Verfahrens zur Ermittlung eines Schätzwertes der Temperatur des Inhalts eines Behälters.

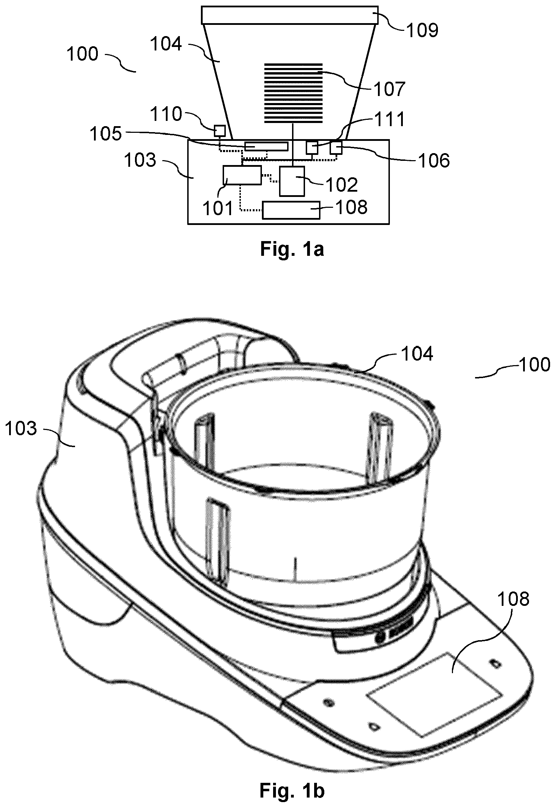

Wie eingangs dargelegt, befasst sich das vorliegende Dokument damit, die Temperatur des Inhalts eines Behälters in effizienter und präziser Weise zu ermitteln. In diesem Zusammenhang zeigt Fig. 1a eine beispielhafte Küchenmaschine 100 (als Beispiel für ein Hausgerät). Die in Fig. 1a dargestellte Küchenmaschine 100 umfasst einen Behälter 104, der auf einer Basis 103 der Küchenmaschine 100 angeordnet ist und in dem Zutaten für ein herzustellendes Nahrungsmittel verarbeitet werden können, z.B. mittels eines Werkzeugs bzw. Einsatzes 107, das bzw. der ggf. durch einen Motor 102 angetrieben wird. Dabei können ggf. unterschiedliche Werkzeuge 107 (z.B. ein Messer, ein Knethaken oder ein Besen) an dem Motor 102 montiert werden. Die Küchenmaschine 100 kann eingerichtet sein, den Behälter 104 mittels einer Temperierungseinheit 105 zu temperieren, z.B. zu kühlen oder zu erwärmen.

Des Weiteren kann die Küchenmaschine 100 ein oder mehrere Sensoren 106, 111 umfassen, die eingerichtet sind, Sensordaten in Bezug auf die Küchenmaschine 100 (insbesondere in Bezug auf einen Zustand der Küchenmaschine 100) und/oder in Bezug auf das herzustellende Nahrungsmittel zu erfassen. Ein beispielhafter Sensor ist ein Basis-Temperatursensor 111, der eingerichtet ist, Temperaturdaten in Bezug auf die Temperatur des Behälters 104 und/oder des darin enthaltenen Nahrungsmittels zu erfassen. Der Basis-Temperatursensor 111 kann einen temperaturabhängigen Messwiderstand umfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Außerdem kann die Küchenmaschine 100 eine Benutzerschnittstelle 108 umfassen, die es einem Nutzer ermöglicht, Steuereingaben an die Küchenmaschine 100 zu tätigen (z.B. über ein oder mehrere Knöpfe), und/oder die es der Küchenmaschine 100 ermöglicht, Rückmeldungen an einen Nutzer der Küchenmaschine 100 auszugeben (z.B. über einen Bildschirm und/oder über eine Anzeige). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer Datenbank herunterzuladen). Ferner kann die Steuereinheit 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen.

Die Küchenmaschine 100 kann einen Deckel 109 zum Abdecken des Behälters 104 aufweisen. Dabei kann der Deckel 109 ggf. mittels einer Riegelvorrichtung (nicht dargestellt) verriegelt werden, um bei Bedarf den Zugang zu dem Behälter 104 zu unterbinden.

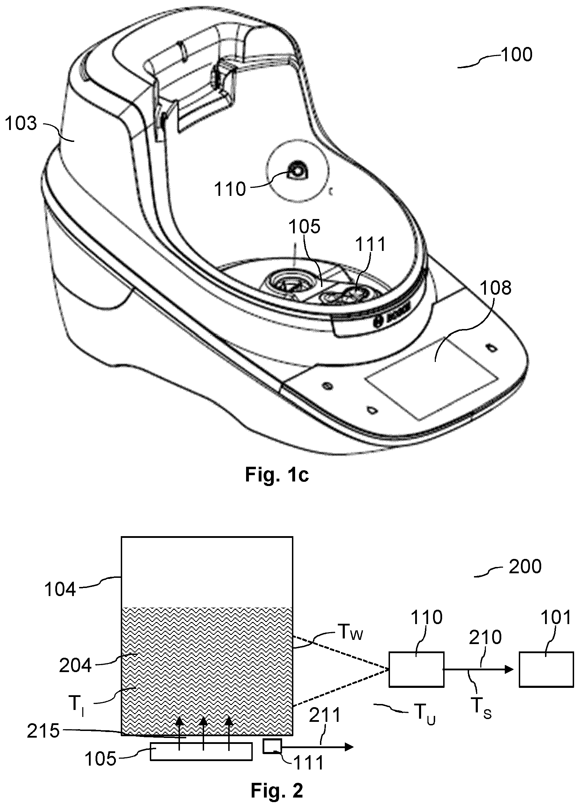

Fig. 1b zeigt eine beispielhafte Küchenmaschine 100 in einer perspektivischen Ansicht. Fig. 1c zeigt die Basis 103 einer beispielhaften Küchenmaschine 100 ohne Behälter 104.

Die Küchenmaschine 100 kann einen Infrarot (IR)-Sensor 110 (in diesem Dokument auch allgemein als Zusatz-Temperatursensor bezeichnet) umfassen, der eingerichtet ist, Sensordaten in Bezug auf die Oberfläche bzw. die Seitenwand des Behälters 104 zu erfassen. Der IR-Sensor (d.h. allgemein der Zusatz-Temperatursensor) 110 kann innerhalb der Basis 103 der Küchenmaschine 100 angeordnet und auf den Ort des (entnehmbaren) Behälters 104 gerichtet sein. Dabei kann der IR-Sensor (d.h. allgemein der Zusatz-Temperatursensor) 110 in einer bestimmten Höhe (z.B. 10mm oder mehr, oder 15mm oder mehr) vom Boden an der Seite des Behälters 104 angeordnet sein. Der IR-Sensor (d.h. allgemein der Zusatz-Temperatursensor) 110 ist eingerichtet, die von einer Oberfläche abgestrahlte (elektromagnetische) Strahlung im Infrarot-Bereich zu erfassen. Insbesondere kann dabei die Intensität der Strahlung erfasst werden.

Auf Basis der erfassten Intensität der Strahlung kann auf die Temperatur der Oberfläche bzw. der Wand des Behälters 104 geschlossen werden.

Fig. 2 zeigt eine Vorrichtung 200, z.B. einen Ausschnitt der Küchenmaschine 100, mit dem Behälter 104 und dem außerhalb des Behälters 104 angeordneten optionalen IR-Sensors 110. Der IR-Sensor 110 ist eingerichtet, Sensordaten 210 in Bezug auf die Temperatur des Behälters 104 und/oder des in dem Behälter 104 angeordneten Inhalts 204 zu erfassen. Der Inhalt 204 in dem Behälter 104 weist eine Inhalts-Temperatur $T_I$ auf, die Wand des Behälters 104 weist eine Wand-Temperatur Tw auf und das Umfeld um den Behälter 104 weist eine Umfeld-Temperatur Tu auf. Die durch die Sensordaten 210 angezeigte Sensor-Temperatur Ts hängt typischerweise von der Inhalts-Temperatur $T_I$, der Wand-Temperatur Tw und/oder der Umfeld-Temperatur Tu ab. Andererseits kann z.B. die Wand-Temperatur Tw auf Basis der durch die Sensordaten 210 angezeigten Sensor-Temperatur Ts und der Umfeld-Temperatur Tu ermittelt werden, z.B. unter Verwendung des Stefan-Boltzmann-Gesetzes durch die Gleichung

$$T_{target\ surface} = \sqrt[4]{\frac{T_{raw\ sensor}^4 - (1-\varepsilon) \cdot T_{ambient}^4}{\varepsilon}}$$

wobei $T_{target\ surface}$ die Wand-Temperatur Tw ist, wobei $T_{raw\ sensor}$ die Sensor-Temperatur Ts ist, wobei $T_{ambient}$ die Umfeld-Temperatur Tu ist, und wobei $\varepsilon$ der Emissionsgrad der Wand des Behälters 104 ist. Durch eine Anpassung (insbesondere durch eine Reduzierung) des Emissionsgrads $\varepsilon$ kann es ermöglicht werden, durch Verwendung der o.g. Gleichung auf Basis der durch die Sensordaten 210 angezeigten Sensor-Temperatur Ts in präziser Weise die Inhalts-Temperatur $T_I$ des Inhalts 204 des Behälters 104 zu schätzen.

Fig. 2 zeigt ferner den Basis-Temperatursensor 111, der z.B. an der Basis 103 der Küchenmaschine 100 unterhalb des Behälters 104 angeordnet ist. Der Basis-Temperatursensor 110 kann einen temperaturabhängigen ohmschen Widerstand umfassen. Der Basis-Temperatursensor 111 ist eingerichtet, Temperaturdaten 211 (d.h. Sensordaten) in Bezug auf die Temperatur des Behälters 104 zu erfassen. Die durch die Temperaturdaten 211 angezeigte Temperatur wird in diesem Dokument als Basis-Temperatur bezeichnet.

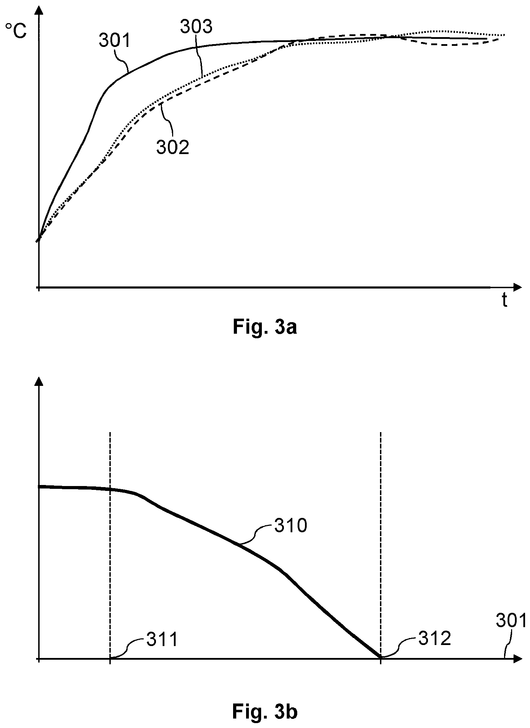

Der Basis-Temperatursensor 110 kann relativ nah an der Temperierungseinheit 105 der Küchenmaschine 100 angeordnet sein. Als Folge daraus können die durch den Basis-Temperatursensor 110 erfassten Temperaturdaten ggf. durch die von der Temperierungseinheit 105 abgestrahlten Heizenergie 215 (d.h. der erzeugten thermischen Energie) beeinflusst sein. Dies ist beispielhaft in Fig. 3a dargestellt. Insbesondere zeigt Fig. 3a den zeitlichen Verlauf der, durch die Temperaturdaten 211 angezeigten, Basis-Temperatur 301, als Funktion der Zeit t während eines Erwärmungs-Prozesses des Inhalts 204 des Behälters 104. Des Weiteren zeigt Fig. 3a den entsprechenden zeitlichen Verlauf der tatsächlichen Inhalts-Temperatur $T_I$ 302 des Inhalts 204 des Behälters 104.

Aus Fig. 3a ist ersichtlich, dass die Basis-Temperatur 301 zumindest zeitweise signifikant von der tatsächlichen Inhalts-Temperatur 302 abweicht. Insbesondere ist dabei die Basis-Temperatur 301 höher als die Inhalts-Temperatur 302, was darauf zurückzuführen ist, dass der Basis-Temperatursensor 110 während des Erwärmungs-Prozesses von der Heizenergie 215 beeinflusst wird, die von der Temperierungseinheit 105 zur Erwärmung des Behälters 104 und des Inhalts 204 erzeugt wird.

Die Steuereinheit 101 kann eingerichtet sein, Energiedaten in Bezug auf die von der Temperierungseinheit 105 erzeugten bzw. bereitgestellten Heizenergie 215 zu ermitteln. Die Energiedaten können z.B. auf Basis der Steuersignale zum Betrieb der Temperierungseinheit 105 ermittelt werden. Beispielsweise kann auf Basis der Stufe, mit der die Temperierungseinheit 105 betrieben wird, geschlossen werden, welche Heizleistung und somit welche (in einem bestimmten Zeitintervall) kumulierte Heizenergie 225 von der Temperierungseinheit 105 erzeugt wird.

Des Weiteren kann die Steuereinheit 101 eingerichtet sein, auf Basis der Temperaturdaten 211 des Basis-Temperatursensors 111 und auf Basis der Energiedaten in Bezug auf die erzeugte Heizenergie 215 einen Schätzwert für die Inhalts-Temperatur 302 des Inhalts 204 des Behälters 104 zu ermitteln. Der Schätzwert für die Inhalts-Temperatur 302 kann dabei mittels der folgenden Formel ermittelt werden:

$$T = T_B - K \cdot E,$$

wobei T der Schätzwert für die Inhalts-Temperatur 302 ist, wobei $T_B$ der durch die Temperaturdaten 211 angezeigte Wert der Basis-Temperatur 301 ist, und wobei E der Mittelwert der in einem bestimmten Zeitintervall erzeugten Heizenergie 215 und/oder Heizleistung der Temperierungseinheit 105 ist (und der durch die Energiedaten angezeigt wird).

K ist ein Korrekturfaktor, der im Vorfeld experimentell ermittelt werden kann. Dabei kann der Korrekturfaktor von dem Wert der Basis-Temperatur 301 abhängen. Wie in Fig. 3b beispielhaft gezeigt, kann der Korrekturfaktor 310, insbesondere in einem Temperaturbereich zwischen einer ersten Temperatur 311 (z.B. 20°C) und einer zweiten Temperatur 312 (z.B. 90°C), mit steigender Basis-Temperatur 301 sinken (z.B. gegen Null tendieren).

Der Korrekturfaktor K kann auf Basis einer Vielzahl von Messungen der Basis-Temperatur 301 und der tatsächlichen Inhalts-Temperatur 302 des Inhalts 204 des Behälters 104 ermittelt werden. Dabei kann der Korrekturfaktor K derart ermittelt werden, dass ein bestimmtes (statistisches) Abstandsmaß zwischen dem (auf Basis der Korrekturfaktors) ermittelten Schätzwert der Inhalts-Temperatur und der tatsächlichen Inhalts-Temperatur 302 reduziert, insbesondere minimiert, wird.

Der Korrekturfaktor 310 kann von dem Typ des Inhalts 204 in dem Behälter 104 abhängen. Insbesondere kann der Korrekturfaktor 310 von der Viskosität des Inhalts 204 abhängen. Die Steuereinheit 101 kann eingerichtet sein, den Typ und/oder die Viskosität des Inhalts 204 zu ermitteln. Beispielsweise kann Inhaltsinformation in Bezug auf den Inhalt 204 des Behälters 104 über die Benutzerschnittstelle 108 der Küchenmaschine 100 von einem Nutzer der Küchenmaschine 100 erfasst werden. Es kann dann der für den jeweiligen Typ von Inhalt 204 zu verwendende Korrekturfaktor 310 in Abhängigkeit von der Inhaltsinformation ausgewählt werden.

Die Steuereinheit 101 kann eingerichtet sein, Gewichtsdaten in Bezug auf das Gewicht des Inhalts 204 zu ermitteln (z.B. unter Verwendung des Gewichtssensors 106). Der Korrekturfaktor 310 kann dann in Abhängigkeit von den Gewichtsdaten ermittelt werden. So kann die Genauigkeit des ermittelten Schätzwertes der Inhalts-Temperatur weiter erhöht werden.

Der Schätzwert der Inhalts-Temperatur kann ggf. auch auf Basis der Sensordaten 210 des IR-Sensors 110 der Vorrichtung 200 ermittelt werden. Durch die zusätzliche Berücksichtigung der Sensordaten 210 des IR-Sensors kann die Genauigkeit des ermittelten Schätzwertes der Inhalts-Temperatur weiter erhöht werden.

Die Steuereinheit 101 der Küchenmaschine 100 kann eingerichtet sein, die Temperierungseinheit 105 in Abhängigkeit von dem ermittelten Schätzwert der Inhalts-Temperatur zu betreiben. Insbesondere kann dabei der Istwert der Inhalts-Temperatur in Abhängigkeit von dem ermittelten Schätzwert der Inhalts-Temperatur auf einen bestimmten Sollwert eingestellt (insbesondere geregelt) werden. So können die Güte des Betriebs einer Küchenmaschine 100 und insbesondere die Qualität eines mit der Küchenmaschine 100 hergestellten Nahrungsmittels erhöht werden.

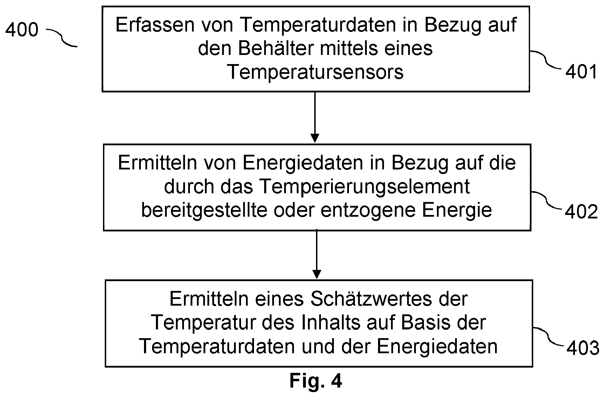

Fig. 4 zeigt ein Ablaufdiagramm eines beispielhaften Verfahrens 400 zur Ermittlung eines Schätzwertes der Inhalts-Temperatur des Inhalts 204 eines Behälters 104. Das Verfahren 400 kann z.B. durch die Steuereinheit 101 eines Hausgeräts 100 ausgeführt werden. Das Verfahren 400 umfasst das Erfassen 401 von Temperaturdaten 211 in Bezug auf den Behälter 104 mittels eines Basis-Temperatursensors 111. Dabei ist der Basis-Temperatursensor 111 derart angeordnet, dass von einer Temperierungseinheit 105 zur Temperierung des Behälters 104 erzeugte oder entzogene thermische Energie 215 den Basis-Temperatursensor 111 beeinflusst. Beispielsweise kann der Basis-Temperierungssensor 111 direkt neben der Temperierungseinheit 105 angeordnet sein.

Das Verfahren 400 umfasst ferner das Ermitteln 402 von Energiedaten in Bezug auf die Energiemenge der erzeugten oder der entzogenen thermischen Energie 215. Die Energiedaten ergeben sich z.B. aus Steuerdaten zur Ansteuerung der Temperierungseinheit 105.

Des Weiteren umfasst das Verfahren 400 das Ermitteln 403 des Schätzwerts der Inhalts-Temperatur des Inhalts 204 des Behälters 104 auf Basis der Temperaturdaten 211 und auf Basis der Energiedaten. Durch die Berücksichtigung der Energiedaten kann der Schätzwert der Inhalts-Temperatur in präziser Weise ermittelt werden. Dies ermöglicht einen präzisen Betrieb eines Hausgeräts 100.

## Patentansprüche

1. Vorrichtung (200) zur Ermittlung eines Schätzwertes der Inhalts-Temperatur des Inhalts (204) eines Behälters (104); wobei die Vorrichtung (200) umfasst,

   - den Behälter (104) zur Aufnahme des Inhalts (204);
   - eine Temperierungseinheit (105), die eingerichtet ist, thermische Energie (215) zu erzeugen oder zu entziehen, um den Behälter (104) von zumindest einer Seite des Behälters (104) her zu temperieren;
   - einen Basis-Temperatursensor (111), der eingerichtet ist, Temperaturdaten (211) in Bezug auf den Behälter (104) zu erfassen, und der derart angeordnet ist, dass die von der Temperierungseinheit (105) erzeugte oder entzogene thermische Energie (215) den Basis-Temperatursensor (111) beeinflusst; und
   - eine Recheneinheit (101), die eingerichtet ist,

      - auf Basis der Temperaturdaten (211) einen Wert einer durch die Temperaturdaten (211) angezeigten Basis-Temperatur (301) zu ermitteln;
      **dadurch gekennzeichnet, dass** die Recheneinheit (101) weiterhin dazu eingerichtet ist,
      - einen von dem ermittelten Wert der Basis-Temperatur (301) abhängigen Korrekturfaktor (310) zu ermitteln;
      - die durch Energiedaten angezeigte Energiemenge der erzeugten oder der entzogenen thermischen Energie (215) mit dem Korrekturfaktor (310) zu multiplizieren, um einen Korrekturwert für die Basis-Temperatur (301) zu ermitteln; und

- den ermittelten Wert der Basis-Temperatur (301) mit dem Korrekturwert zu korrigieren, um den Schätzwert der Inhalts-Temperatur des Inhalts (204) des Behälters (104) zu ermitteln.

2. Vorrichtung (200) gemäß Anspruch 1, wobei die Recheneinheit (101) eingerichtet ist,

- den Korrekturwert von dem ermittelten Wert der Basis-Temperatur (301) abzuziehen, um den Schätzwert der Inhalts-Temperatur zu ermitteln, wenn die Temperierungseinheit (105) thermische Energie (215) erzeugt; und/oder
- den Korrekturwert zu dem ermittelten Wert der Basis-Temperatur (301) zu addieren, um den Schätzwert der Inhalts-Temperatur zu ermitteln, wenn die Temperierungseinheit (105) thermische Energie (215) entzieht.

3. Vorrichtung (200) gemäß einem der Ansprüche 1 bis 2, wobei die Recheneinheit (101) eingerichtet ist,

- Inhaltsinformation in Bezug auf eine Eigenschaft des Inhalts (204) zu ermitteln; wobei die Inhaltsinformation einen Typ, eine Viskosität und/oder ein Gewicht des Inhalts (204) anzeigt; und
- den Korrekturfaktor in Abhängigkeit von der Inhaltsinformation zu ermitteln.

4. Vorrichtung (200) gemäß einem der vorhergehenden Ansprüche, wobei die Recheneinheit (101) eingerichtet ist,

- Gewichtsdaten in Bezug auf ein Gewicht des Inhalts (204) des Behälters (104) zu ermitteln; und
- den Schätzwert der Inhalts-Temperatur auch in Abhängigkeit von den Gewichtsdaten zu ermitteln.

5. Vorrichtung (200) gemäß einem der vorhergehenden Ansprüche, wobei die Recheneinheit (101) eingerichtet ist, die Energiedaten auf Basis von Steuerdaten zur Steuerung der Temperierungseinheit (105) und auf Basis von Kenndaten in Bezug auf die Temperierungseinheit (105) zu ermitteln.

6. Vorrichtung (200) gemäß einem der vorhergehenden Ansprüche, wobei

- die Vorrichtung (200) einen Zusatz-Temperatursensor, insbesondere einen Infrarot, kurz IR, Sensor (110), umfasst, der auf eine Behälter-Wand des Behälters (104) gerichtet ist, und der eingerichtet ist, Sensordaten (210) in Bezug auf eine Wand-Temperatur der Behälter-Wand zu erfassen; und
- die Recheneinheit (101) eingerichtet ist, den Schätzwert der Inhalts-Temperatur auch auf Basis der Sensordaten (210) des Zusatz-Temperatursensors (110) zu ermitteln.

7. Vorrichtung (200) gemäß Anspruch 6, wobei der Zusatz-Temperatursensor eingerichtet ist, Sensordaten (210) in Bezug auf eine Intensität von Strahlung im Infrarot-Spektralbereich zu erfassen, die von der Behälter-Wand ausgeht.

8. Vorrichtung (200) gemäß einem der vorhergehenden Ansprüche, wobei die Recheneinheit (101) eingerichtet ist, die Temperierungseinheit (105) in Abhängigkeit von dem ermittelten Schätzwert der Inhalts-Temperatur zu betreiben, insbesondere um einen Istwert der Inhalts-Temperatur auf einen Sollwert einzustellen.

9. Vorrichtung (200) gemäß einem der vorhergehenden Ansprüche, wobei der Basis-Temperatursensor (111) einen temperaturabhängigen elektrischen Widerstand umfasst.

10. Hausgerät (100), das umfasst,

- die Vorrichtung (200) gemäß einem der vorhergehenden Ansprüche, die eingerichtet ist, einen Schätzwert der Inhalts-Temperatur des Inhalts (204) des Behälters (104) zu ermitteln; und
- eine Steuereinheit (101), die eingerichtet ist, das Hausgerät (100) in Abhängigkeit von dem ermittelten Schätzwert der Inhalts-Temperatur ($T_I$) zu betreiben.

11. Hausgerät (100) gemäß Anspruch 10, wobei das Hausgerät (100) eine Küchenmaschine ist und der Inhalt (204) ein von der Küchenmaschine verarbeitetes Nahrungsmittel ist.

12. Verfahren (400) zur Ermittlung eines Schätzwertes der Inhalts-Temperatur des Inhalts (204) eines Behälters (104); wobei das Verfahren (400) umfasst,

- Erfassen (401) von Temperaturdaten (211) in Bezug auf den Behälter (104) mittels eines Basis-Temperatursensors (111), wobei der Basis-Temperatursensor (111) derart angeordnet ist, dass von einer Temperierungseinheit (105) zur Temperierung des Behälters (104) erzeugte oder entzogene thermische Energie (215) den Basis-Temperatursensor (111) beeinflusst;
- Ermitteln (402) von Energiedaten in Bezug auf eine Energiemenge der erzeugten oder der entzogenen thermischen Energie (215);
- Ermitteln, auf Basis der Temperaturdaten (211), eines Wertes einer durch die Temperaturdaten (211) angezeigten Basis-Temperatur (301);

**dadurch gekennzeichnet, dass** das Verfahren weiterhin umfasst:

- Ermitteln eines von dem ermittelten Wert der Basis-Temperatur (301) abhängigen Korrekturfaktors (310);
- Multiplizieren der durch die Energiedaten angezeigten Energiemenge der erzeugten oder der entzogenen thermischen Energie (215) mit dem Korrekturfaktor (310), um einen Korrekturwert für die Basis-Temperatur (301) zu ermitteln; und
- Korrigieren des ermittelten Wertes der Basis-Temperatur (301) mit dem Korrekturwert, um den Schätzwert der Inhalts-Temperatur des Inhalts (204) des Behälters (104) zu ermitteln.

**Claims**

1. Apparatus (200) for determining an estimated value of the contents temperature of the contents (204) of a container (104); wherein the apparatus (200) comprises,

    - the container (104) for accommodating the contents (204);
    - a temperature control unit (105), which is configured to generate or to withdraw thermal energy (215) in order to control the temperature of the container (104) from at least one side of the container (104);
    - a base temperature sensor (111), which is configured to acquire temperature data (211) with regard to the container (104), which is arranged in such a way that the thermal energy (215) generated or withdrawn by the temperature control unit (105) influences the base temperature sensor (111); and
    - a processing unit (101), which is configured,

        - on the basis of the temperature data (111), to determine a value of a base temperature (301) shown by the temperature data (211);

    **characterised in that** the processing unit (101) is further configured,

        - to determine a correction factor (310) dependent on the value of the base temperature (301) determined;
        - to multiply by the energy data shown the amount of energy of the thermal energy (215) generated or withdrawn (310) in order to determine a correction value for the base temperature (301); and
        - to correct with the correction value the value of the base temperature (301) determined, in order to determine the estimated value of the contents temperature of the contents (204) of the container (104).

2. Apparatus (200) according to claim 1, wherein the processing unit (101) is configured,

        - to subtract the correction value from the value of the base temperature (301) determined, in order to determine the estimated value of the temperature of the contents when the temperature control unit (105) is generating thermal energy (215); and/or
        - to add the correction value to the value of the base temperature (301) determined, in order to determine the estimated value of the temperature of the contents when the temperature control unit (105) is withdrawing thermal energy (215).

3. Apparatus (200) according to one of claims 1 to 2, wherein the processing unit (101) is configured,

        - to determine contents information with regard to a property of the contents (204); wherein the contents information shows a type, a viscosity and/or a weight of the contents (204); and
        - to determine the correction factor depending on the contents information.

4. Apparatus (200) according to one of the preceding claims, wherein the processing unit (101) is configured,

   - to determine weight data with regard to a weight of the contents (204) of the container (104); and
   - to also determine the estimated value of the temperature of the contents depending on the weight data.

5. Apparatus (200) according to one of the preceding claims, wherein the processing unit (101) is configured to determine the energy data on the basis of control data for controlling the temperature control unit (105) and on the basis of characteristic data with regard to the temperature control unit (105).

6. Apparatus (200) according to one of the preceding claims, wherein

   - the apparatus (200) comprises a supplementary temperature sensor, in particular an infrared sensor (110), abbreviated to IR, which is directed to a container wall of the container (104), and which is configured to acquire sensor data (210) with regard to a wall temperature of the container wall; and
   - the processing unit (101) is also configured to determine the estimated value of the temperature of the contents on the basis of the sensor data (210) of the supplementary temperature sensor (110).

7. Apparatus (200) according to claim 6, wherein the supplementary temperature sensor is configured to acquire sensor data (210) with regard to an intensity of radiation in the infrared spectral range that emanates from the container wall.

8. Apparatus (200) according to one of the preceding claims, wherein the processing unit (101) is configured to operate the temperature control unit (105) depending on the estimated value of the temperature of the contents, in particular in order to set an actual value of the temperature of the contents to a required value.

9. Apparatus (200) according to one of the preceding claims, wherein the base temperature sensor (111) comprises a temperature-dependent electrical resistor.

10. Household appliance (100), which comprises,

   - the apparatus (200) according to one of the preceding claims, which is configured to determine an estimated value of the contents temperature of the contents (204) of the container (104); and
   - a control unit (101), which is configured to operate the household appliance (100) depending on the estimated value of temperature of the contents ($T^i$) determined.

11. Household appliance (100) according to claim 10, wherein the household appliance (100) is a kitchen machine, and the contents (204) are a foodstuff processed by the kitchen machine.

12. Method (400) for determining an estimated value of the contents temperature of the contents (204) of a container (104); wherein the method (400) comprises

   - acquisition (401) of temperature data (211) with regard to the container (104) by means of a base temperature sensor (111), wherein the base temperature sensor (111) is arranged in such a way that thermal energy (215) generated or withdrawn by a temperature control unit (105) for temperature control of the container (104) influences the base temperature sensor (111);
   - determination (402) of energy data with regard to an amount of energy of the thermal energy (215) generated or withdrawn;
   - determination, on the basis of the temperature data (211), of a value of a base temperature (301) shown by the temperature data (211);

   **characterised in that** the method furthermore comprises:

   - determination of a correction factor (310) dependent on the value of the base temperature (301) determined;
   - multiplication by the correction factor (310) of the amount of energy of the thermal energy generated or withdrawn (215) shown by the energy data, in order to determine a correction value for the base temperature (301): and
   - correction of the value of the base temperature (301) determined with the correction value, in order to determine the estimated value of the contents temperature of the contents (204) of the container (104).

**Revendications**

1. Dispositif (200) pour déterminer une estimation de la température du contenu (204) d'un récipient (104), dans lequel le dispositif (200) comprend

   - le récipient (104) destiné à recueillir le contenu (204) ;
   - une unité de régulation de température (105) qui est configurée pour produire ou extraire de l'énergie thermique (215) afin de réguler la température du récipient (104) à partir d'au moins un côté du récipient (104) ;
   - un capteur de température de base (111) qui est configuré pour détecter des données de température (211) par rapport au récipient (104) et qui est disposé de telle sorte que l'énergie thermique (215) produite ou extraite par l'unité de régulation de température (105) influence le capteur de température de base (111) ; et
   - une unité de calcul (101) qui est configurée pour déterminer,

        - sur la base des données de température (211), une valeur d'une température de base (301) indiquée par les données de température (211) ;

   **caractérisé en ce que** l'unité de calcul (101) est en outre configurée pour

   - déterminer un facteur de correction (310) qui dépend de la valeur déterminée de la température de base (301) ;
   - multiplier la quantité d'énergie de l'énergie thermique (215) produite ou extraite indiquée par les données d'énergie par le facteur de correction (310) afin de déterminer une valeur de correction pour la température de base (301) ; et
   - corriger la valeur déterminée de la température de base (301) par la valeur de correction afin de déterminer la valeur estimée de la température du contenu (204) du récipient (104).

2. Dispositif (200) selon la revendication 1, dans lequel l'unité de calcul (101) est configurée

   - pour soustraire la valeur de correction de la valeur déterminée de la température de base (301) afin de déterminer la valeur estimée de la température du contenu lorsque l'unité de régulation de température (105) produit de l'énergie thermique (215) ; et/ou
   - pour ajouter la valeur de correction à la valeur déterminée de la température de base (301) afin de déterminer la valeur estimée de la température du contenu lorsque l'unité de régulation de température (105) extrait de l'énergie thermique (215).

3. Dispositif (200) selon l'une des revendications 1 et 2, dans lequel l'unité de calcul (101) est configurée pour

   - déterminer des informations de contenu concernant une propriété du contenu (204) ; dans lequel les informations de contenu indiquent un type, une viscosité et/ou un poids du contenu (204) ; et
   - déterminer le facteur de correction en fonction des informations de contenu.

4. Dispositif (200) selon l'une des revendications précédentes, dans lequel l'unité de calcul (101) est configurée pour

   - déterminer des données de poids par rapport à un poids du contenu (204) du récipient (104) ; et
   - déterminer la valeur estimée de la température du contenu, également en fonction des données de poids.

5. Dispositif (200) selon l'une des revendications précédentes, dans lequel l'unité de calcul (101) est configurée pour déterminer les données d'énergie sur la base de données de commande pour la commande de l'unité de régulation de température (105) et sur la base de données caractéristiques par rapport à l'unité de régulation de température (105).

6. Dispositif (200) selon l'une des revendications précédentes, dans lequel

   - le dispositif (200) comprend un capteur de température supplémentaire, en particulier un capteur infrarouge (110), en abrégé IR, qui est dirigé vers une paroi du récipient (104) et qui est configuré pour détecter des données de capteur (210) par rapport à une température de paroi de la paroi du récipient ; et
   - l'unité de calcul (101) est configurée pour déterminer la valeur estimée de la température du contenu également sur la base des données de capteur (210) du capteur de température supplémentaire (110).

**7.** Dispositif (200) selon la revendication 6, dans lequel le capteur de température supplémentaire est configuré pour détecter des données de capteur (210) par rapport à une intensité du rayonnement dans le domaine spectral infrarouge qui provient de la paroi du récipient.

**8.** Dispositif (200) selon l'une des revendications précédentes, dans lequel l'unité de calcul (101) est configurée pour faire fonctionner l'unité de régulation de température (105) en fonction de la valeur estimée de la température du contenu qui a été déterminée, en particulier pour régler une valeur réelle de la température du contenu sur une valeur de consigne.

**9.** Dispositif (200) selon l'une des revendications précédentes, dans lequel le capteur de température de base (111) comprend une résistance électrique dépendante de la température.

**10.** Appareil électroménager (100) comprenant

- le dispositif (200) selon l'une des revendications précédentes, qui est configuré pour déterminer une valeur estimée de la température du contenu (204) du récipient (104) ; et
- une unité de calcul (101) qui est configurée pour faire fonctionner l'appareil électroménager (100) en fonction de la valeur estimée de la température du contenu ($T_l$) qui a été déterminée.

**11.** Appareil électroménager (100) selon la revendication 10, dans lequel l'appareil électroménager (100) est un robot de cuisine et le contenu (204) est un aliment transformé par le robot de cuisine.

**12.** Procédé (400) pour déterminer une estimation de la température du contenu (204) d'un récipient (104), dans lequel le procédé (400) comprend

- la détection (401) de données de température (211) par rapport au récipient (104) au moyen d'un capteur de température de base (111), dans lequel le capteur de température de base (111) est configuré de telle sorte que l'énergie thermique (215) produite ou extraite par une unité de régulation de température (105) afin de réguler la température du récipient (104) influence le capteur de température de base (111) ;
- la détermination (402) de données d'énergie par rapport à une quantité d'énergie de l'énergie thermique (215) produite ou extraite ;
- la détermination, sur la base des données de température (211), d'une valeur d'une température de base (301) indiquée par les données de température (211) ;

**caractérisé en ce que** le procédé comprend en outre :

- la détermination d'un facteur de correction (310) dépendant de la valeur déterminée de la température de base (301) ;
- la multiplication de la quantité d'énergie de l'énergie thermique (215) produite ou extraite indiquée par les données d'énergie par le facteur de correction (310) afin de déterminer un facteur de correction pour la température de base (301) ; et
- la correction de la valeur déterminée de la température de base (301) avec la valeur de correction pour déterminer la valeur estimée de la température du contenu (204) du récipient (104).

**Fig. 1a**

**Fig. 1b**

**Fig. 1c**

**Fig. 2**

**Fig. 3a**

**Fig. 3b**

400

Erfassen von Temperaturdaten in Bezug auf
den Behälter mittels eines
Temperatursensors

401

Ermitteln von Energiedaten in Bezug auf die
durch das Temperierungselement
bereitgestellte oder entzogene Energie

402

Ermitteln eines Schätzwertes der
Temperatur des Inhalts auf Basis der
Temperaturdaten und der Energiedaten

403

**Fig. 4**

**EP 4 004 508 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2572173 B1
- US 6462316 B1
- DE 102016113494 A1